# EUROPEAN PATENT APPLICATION

(11) **EP 4 625 523 A1**
(43) Date of publication of application: **01.10.2025**
(21) Application number: 24832554.0
(22) Date of filing: 26.06.2024
(51) Int. Cl.: H01M 4/133, H01M 4/587, H01M 4/36, H01M 4/62, H01M 4/38, H01M 4/48, H01M 4/1393, H01M 4/02

(54) **NEGATIVE ELECTRODE FOR LITHIUM SECONDARY BATTERY, LITHIUM SECONDARY BATTERY INCLUDING SAME, AND METHOD FOR MANUFACTURING NEGATIVE ELECTRODE**

(30) Priority: 30.06.2023 KR 20230085005
(71) Applicant: LG Energy Solution, Ltd., Seoul 07335 (KR)
(72) Inventor: AHN, Ji Hee, Daejeon 34122 (KR); KIM, Ji Hyun, Daejeon 34122 (KR); LIM, Soo Hyun, Daejeon 34122 (KR)
(74) Representative: Plasseraud IP
(86) International application number: PCT/KR2024/095893
(87) International publication number: WO 2025/005778

(57) **Abstract**

Disclosed herein relates to a negative electrode for a lithium secondary battery. According to exemplary embodiments, a negative electrode is provided. The negative electrode includes: a current collector; a first negative electrode active material layer; and a second negative electrode active material layer. The second negative electrode active material layer includes a plurality of concave portions indented toward the first negative electrode active material layer and a plurality of non-concave portions, the plurality of the concave portions and the plurality of the non-concave portions are alternately arranged in a horizontal direction, and a surface of the second negative electrode active material layer has a pattern formed by a plurality of steps.

## Description

### [Technical Field]

This application claims the benefit of priority from Korean Patent Application No. 10-2023-0085005, filed on June 30, 2023, the disclosure of which is incorporated herein by reference in its entirety.

The present invention relates to a negative electrode with improved cycle resistance characteristics during charging and discharging, a lithium secondary battery including the same, and a method for manufacturing the negative electrode, in a high-loading/high-density negative electrode for satisfying high-energy density and high-power battery specifications.

### [Background Technology of the Invention]

With the recent increase in technology development and demand for mobile devices, the demand for batteries as energy sources has surged. Additionally, with HEV, PHEV, and EV vehicles being spotlighted as future vehicles, diverse research on batteries to meet various demands is being actively conducted.

In particular, research on lithium secondary batteries with high energy density and excellent cycle and life characteristics is actively progressing.

Conventional lithium secondary batteries primarily use carbon-based compounds as the negative electrode active material, which can reversibly intercalate and deintercalate lithium ions while maintaining structural and electrical properties. However, as the demand for developing batteries with high energy density increases, extensive research is being conducted on materials other than carbon-based compounds, such as silicon and tin, which are transition metals (Group IV, V) or their alloys and oxides that chemically react with lithium.

Among these, silicon is highlighted as a high-capacity negative electrode material due to its theoretical maximum capacity of approximately 4020 mAh/g (9800 mAh/cc, specific gravity 2.23), which is significantly larger than that of carbon-based materials. However, silicon and its alloys have the problem of repeated substantial expansion (up to 4 times) and contraction during charging and discharging, leading to degradation of the negative electrode and reduced cycle life of the battery.

This phenomenon becomes more pronounced as the content of high-capacity negative electrode active material increases to produce high-energy density cells. Therefore, research is required in the industry on methods to control volumetric expansion during charging and discharging to improve the structural stability of the electrode and consequently improve the performance of the battery.

Furthermore, as the demand for developing high-energy density batteries increases, the development of high-loading and high-density electrodes is mainly being pursued. However, high-loading/high-density electrodes face the problem of increased resistance due to larger pore resistance and longer lithium-ion migration paths, which slow down the diffusion of lithium ions within the electrode. Therefore, efforts are also needed to improve the increased resistance associated with high-loading and high-density electrodes.

### [Description of the Invention]

### [Technical Problem]

The technical problem that the present invention aims to solve is to provide a negative electrode for lithium secondary batteries that can improve the structural stability degradation due to volumetric expansion while increasing the lithium ion mobility in high-loading negative electrodes.

### [Technical Solution]

According to one embodiment, the present invention provides a negative electrode for a lithium secondary battery including:
a current collector;
a first negative electrode active material layer formed on one or both surfaces of the current collector, and including a first negative electrode active material, which is a carbon-based compound, as a negative electrode active material; and
a second negative electrode active material layer formed on the first negative electrode active material layer, and including a second negative electrode active material different from the carbon-based compound as a negative electrode active material, wherein
the second negative electrode active material layer includes a plurality of concave portions indented toward the first negative electrode active material layer and a plurality of non-concave portions, wherein the plurality of the concave portions and the plurality of the non-concave portions are alternately arranged in a horizontal direction, and
the plurality of the concave portions are filled with a conductive layer including a conductive material, wherein
a thickness of the conductive layer filled in the plurality of the concave portions is smaller than a thickness of the plurality of the non-concave portion, and the surface of a second negative electrode active material layer has a pattern formed by a plurality of steps between the conductive layer and the plurality of the non-concave portions.

In one embodiment, the conductive layer further includes a negative electrode active material.

In one embodiment, the conductive layer comprises a same composition as the second negative electrode active material layer.

In one embodiment, a wt% of the conductive material included in the conductive layer is greater than a wt% of the conductive material included in the second negative electrode active material layer.

In one embodiment, the conductive layer includes: 70 to 94 parts by weight of the negative electrode active material; 5 to 20 parts by weight of the conductive material; and 1 to 10 parts by weight of a binder.

In one embodiment, the conductive layer does not include a negative electrode active material, and includes: 80 to 100 parts by weight of the conductive material and 20 parts by weight or less of a binder.

According to another embodiment of the present invention, the present invention provides a negative electrode for a lithium secondary battery including: a current collector; a first negative electrode active material layer formed on one or both surfaces of the current collector, and including a first negative electrode active material, which is a carbon-based compound, as a negative electrode active material; and a second negative electrode active material layer formed on the first negative electrode active material layer, and including a second negative electrode active material different from the carbon-based compound as a negative electrode active material, wherein the second negative electrode active material layer includes a plurality of concave portions indented toward the first negative electrode active material layer and a plurality of non-concave portions, wherein the plurality of the concave portions and the plurality of the non-concave portions are alternately arranged in a horizontal direction, wherein the surface of the second negative electrode active material layer has a pattern formed by a plurality of steps between the plurality of the non-concave portions and the plurality of the concave portions.

In one embodiment, a horizontal width of each of the plurality of the non-concave portions ranges from 50 µm to 1500 µm.

In one embodiment, a horizontal width of each of the plurality of the concave portions rangesfrom 10 µm to 800 µm, and wherein the horizontal width of each of the plurality of the concave portions is less than or equal to a horizontal width of the plurality of the non-concave portions.

In one embodiment, a length of the plurality of steps ranges from5 µm to 60 µm.

In one embodiment, the first negative electrode active material included in the first negative electrode active material layer is composed of a carbon-based first negative electrode active material.

In one embodiment, the carbon-based first negative electrode active material is a graphite-based negative electrode active material.

In one embodiment, the second negative electrode active material may be one or more mixtures selected from the group consisting of Si, SiOx(0<x<2), Si-C composite, and Si metal alloy.

In one embodiment, an average value of a total loading amount of the first negative electrode active material layer and the second negative electrode active material layer is 4 mAh/cm² or more.

According to another embodiment of the present invention, the present invention provides a lithium secondary battery including the negative electrode described above.

According to another embodiment of the present invention, the present invention provides a method for manufacturing a negative electrode for a lithium secondary battery including: mixing and stirring a carbon-based first negative electrode active material, a conductive material, and a binder in a solvent to prepare a first negative electrode slurry; mixing and stirring a second negative electrode active material different from the carbon-based first negative electrode active material, a conductive material, and a binder in a solvent to prepare a second negative electrode slurry; preparing a conductive layer slurry; a first coating process of coating the first negative electrode slurry on a current collector; a second coating process of coating the second negative electrode slurry and the conductive layer slurry on the first negative electrode slurry; and drying the first negative electrode slurry, the second negative electrode slurry, and the conductive layer slurry, wherein the second coating process coats so that the second negative electrode slurry and the conductive layer slurry are alternately arranged in a horizontal direction.

In one embodiment, a solid content of the second negative electrode slurry is greater than a solid content of the conductive layer slurry.

In one embodiment, the second coating process includes coating the second negative electrode slurry and the conductive layer slurry using a nozzle printer.

In one embodiment, the conductive layer slurry further includes a negative electrode active material.

In one embodiment, the conductive layer slurry and the second negative electrode slurry comprise a same composition.

In one embodiment, a wt% of the conductive material included in a solid content of the conductive layer slurry is greater than a wt% of the conductive material included in a solid content of the second negative electrode slurry.

In one embodiment, the conductive layer slurry does not include a negative electrode active material, and includes: 80 to 100 parts by weight of the conductive material and 20 parts by weight or less of the binder in a solid content.

According to another embodiment of the present invention, the present invention provides a method for manufacturing a negative electrode for a lithium secondary battery including: mixing and stirring a carbon-based first negative electrode active material, a conductive material, and a binder in a solvent to prepare a first negative electrode slurry; mixing and stirring a second negative electrode active material different from the carbon-based first negative electrode active material, a conductive material, and a binder in a solvent to prepare a second negative electrode slurry; coating the first and second negative electrode slurries on a current collector so that the second negative electrode slurry is stacked on the first negative electrode slurry; drying the first and second negative electrode slurries; and etching a second negative electrode active material layer formed by drying the second negative electrode slurry at a predetermined spacing and width to form a pattern in which a plurality of concave portions indented toward the current collector and a plurality of non-concave portions are alternately arranged in a horizontal direction.

In one embodiment, the patterning process includes etching using a laser.

### [Advantageous Effects]

In one embodiment of the present invention, the negative electrode includes a first negative electrode active material, which is a carbon-based compound with excellent structural stability, in the lower layer, and a second negative electrode active material with excellent capacity and input/output characteristics in the upper layer, which can alleviate the problem of expansion in the thickness direction of the negative electrode active material layer with cycle repetition, and can improve resistance and input/output characteristics even when the negative electrode is highly loaded.

The negative electrode according to one embodiment of the present invention has excellent structural stability as a result of the stepped pattern formed on the surface of the second negative electrode active material layer, which increases the reaction area on the surface of the negative electrode, thereby suppressing the increase in resistance due to high loading of the negative electrode, and the stepped space on the surface of the second negative electrode active material layer acts as a buffer against volume changes of the negative electrode active material layer.

### [Brief Description of the Drawings]

FIG. 1 is a top view of a negative electrode according to one embodiment of the present invention.
FIG. 2 is a vertical cross-sectional view of a negative electrode according to one embodiment of the present invention.
FIG. 3 is a vertical cross-sectional view of a negative electrode according to another embodiment of the present invention.
FIG. 4 is a vertical cross-sectional view of a negative electrode according to yet another embodiment of the present invention.
FIG. 5 is a flowchart illustrating a method for manufacturing a negative electrode for a lithium secondary battery according to one embodiment of the present invention.
FIG. 6 is a flowchart illustrating a method for manufacturing a negative electrode for a lithium secondary battery according to another embodiment of the present invention.
FIG. 7 is a diagram illustrating the secondary coating process in the method for manufacturing a negative electrode according to one embodiment of the present invention.

### [Best Mode for Carrying out the Invention]

Hereinafter, the present invention will be described in more detail to aid understanding of the invention.

The terms and words used in this specification and the claims should not be interpreted as being limited to their usual or dictionary meanings, but should be interpreted based on the principle that the inventor can appropriately define the concepts of the terms to best explain his invention. Therefore, they should be understood in a sense and meaning consistent with the technical ideas of the present invention.

The terms used in this specification is for the purpose of describing exemplary embodiments only and is not intended to limit the invention. Singular expressions include plural expressions unless the context clearly indicates otherwise.

In this specification, terms such as "include," "comprise," or "have" specify the presence of stated features, numbers, steps, components, or combinations thereof, but do not preclude the presence or addition of one or more other features, numbers, steps, components, or combinations thereof.

The term "combination(s) thereof" included in Markush-type expressions means mixtures or combinations of one or more selected from the group consisting of the components listed in the Markush-type expression, and it means including one or more selected from the group consisting of the components listed.

In this specification, "A and/or B" means "A or B or both."

In this specification, "%" means wt% unless explicitly stated otherwise.

The specific surface area can be measured by the BET (Brunauer-Emmett-Teller) method in this specification. For example, it can be measured by the BET 6-point method using a porosimetry analyzer (Porosimetry analyzer; Bell Japan Inc, Belsorp-II mini) through nitrogen gas adsorption and desorption method.

In this specification, the average particle diameter (D₅₀) can be defined as the particle diameter at the 50% point in the particle diameter distribution. The average particle diameter is not particularly limited, but it can be measured using methods such as laser diffraction or scanning electron microscopy (SEM) imaging. The laser diffraction method generally allows the measurement of particle diameters ranging from submicron levels to several millimeters and provides results with high reproducibility and high resolution.

In this specification, the full width direction of the negative electrode is defined as the X-axis direction, the full-length direction of the negative electrode is defined as the Y-axis direction, and the direction perpendicular to the plane formed by the combination of the X-axis and Y-axis directions is defined as the Z-axis direction. The X-axis and Y-axis directions are referred to as horizontal directions.

### Negative Electrode for Lithium Secondary Battery

### [First Embodiment]

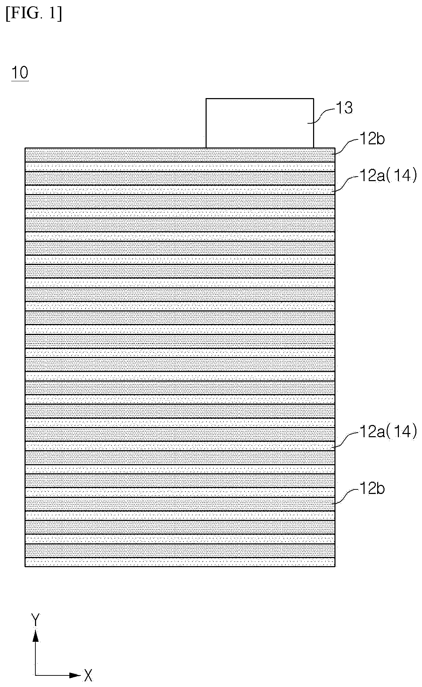

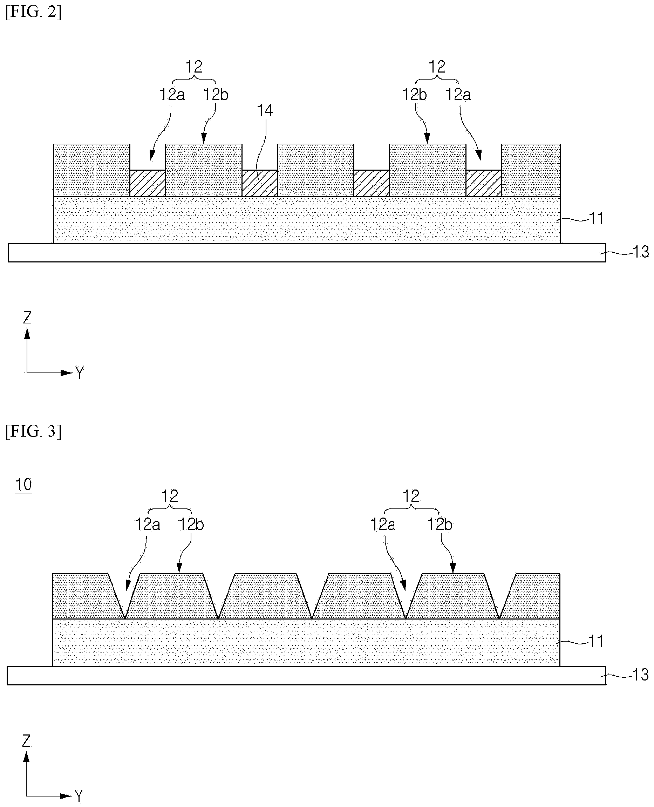

FIG. 1 is a top view of a negative electrode according to one embodiment of the present invention, and FIG. 2 is a vertical cross-sectional view of a negative electrode according to one embodiment of the present invention.

Referring to these drawings, a negative electrode 10 (hereinafter referred to as the 'negative electrode') for a lithium secondary battery according to the first embodiment includes: a first negative electrode active material layer 11 formed on one or both surfaces of the current collector 13; and a second negative electrode active material layer 12 formed on the first negative electrode active material layer 11, wherein the second negative electrode active material layer 12 includes a plurality of concave portions 12a indented toward the first negative electrode active material layer 11 and a plurality of non-concave portions 12b, wherein the concave portion 12a and non-concave portion 12b are alternately arranged in the horizontal direction, and the concave portion 12a is filled with a conductive layer 14 including a conductive material, wherein the thickness of the conductive layer 14 filled in the concave portion 12a is smaller than the thickness of the non-concave portion 12b, and the surface of the second negative electrode active material layer 12 has a pattern formed by the steps between the conductive layer 14 and the non-concave portion 12b.

FIG. 2 illustrates an embodiment in which the first negative electrode active material layer 11 and the second negative electrode active material layer 12 are sequentially formed on one surface of the current collector 13. However, the invention is not limited to this configuration, and the first negative electrode active material layer 11 and the second negative electrode active material layer 12 may also be sequentially formed on both surfaces of the current collector 13.

The first negative electrode active material layer 11 includes a carbon-based first negative electrode active material that, despite having a somewhat smaller capacity, offers excellent structural stability. The second negative electrode active material layer 12 includes a second negative electrode active material different from the carbon-based compound. The second negative electrode active material is chosen for its higher capacity and superior input/output characteristics compared to the carbon-based first negative electrode active material. For example, to enhance the rapid charging performance of the battery, the upper layer of the negative electrode may include a second negative electrode active material such as transition metals or their oxides, represented by a silicon-based material, which favor the diffusion of lithium ions, and to compensate for the structural instability inherent in these active materials, the first negative electrode active material layer includes a carbon-based first negative electrode active material. This configuration mitigates the problem of expansion in the thickness direction of the negative electrode active material layer during repeated cycles and improves input/output characteristics even when the negative electrode is highly loaded.

The concave portion 12a may be indented toward the first negative electrode active material layer 11 to a depth corresponding to the thickness of the non-concave portion 12b. That is, as shown in FIG. 2, the interior of the concave portion 12a of the second negative electrode active material layer 12 may not contain the second negative electrode active material, thereby exposing the first negative electrode active material layer 11. The conductive layer 14 is filled inside the concave portion 12a, resulting in a structure where a plurality of rows of non-concave portions 12b and a plurality of rows of conductive layers 14 are alternately arranged on the first negative electrode active material layer 11.

A plurality of non-concave portions 12b are spaced apart from each other at predetermined distance, and a concave portion 12a is placed between the spaced non-concave portions 12b, and the interior of the concave portion 12a is filled with the conductive layer 14. The thickness of the conductive layer 14 is smaller than the thickness of the non-concave portion 12b. The step space created by the thickness difference between the non-concave portion 12b and the conductive layer 14 serves to buffer the volume changes of the negative electrode active material layers 11, 12 during repeated charging and discharging cycles. This buffering effect helps prevent the delamination of the negative electrode active material during charging and discharging, thereby improving the performance of the battery.

When a step pattern is formed between the non-concave portion 12b and the conductive layer 14, the surface area of the second negative electrode active material layer is larger compared to when such a step pattern is absent. This increased surface area can enhance the lithium-ion pathways, reducing the resistance of the negative electrode and improving input/output characteristics.

In exemplary embodiments, the second negative electrode active material layer 12 and the conductive layer 14 are disposed on the first negative electrode active material layer 11, covering the surface of the first negative electrode active material layer 11. As a result, the second negative electrode active material layer with excellent input/output characteristics is positioned on the surface of the negative electrode, providing an advantage for rapid charging.

The number of rows of non-concave portions 12b and concave portions 12a can be appropriately selected according to the size of the punched negative electrode and is not particularly limited. Specifically, these rows can be arranged in a range from at least 100 rows, more specifically from 200 rows to 9000 rows, and even more specifically from 200 rows to 8000 rows. Here, the punched negative electrode refers to a negative electrode that is notched and cut to a predetermined full width and full length suitable for assembling into a secondary battery (see FIG. 1).

The horizontal width (X-axis or Y-axis direction) of each of the plurality of non-concave portions 12b can range from 50 to 1500 µm, more specifically from 150 to 1250 µm, and even more specifically from 200 to 1000 µm.

The horizontal width (X-axis or Y-axis direction) of each of the plurality of concave portions 12a can be within the range less than or equal to the horizontal width of the non-concave portions 12b, specifically from 10 to 800 µm, more specifically from 10 to 600 µm, and even more specifically from 20 to 400 µm.

When the horizontal widths of the non-concave portions 12b and concave portions 12a fall within these ranges, the effects of improving input/output characteristics and resistance are optimized, and the life characteristics and capacity characteristics can be further enhanced.

The length of the step, which is the difference in thickness between the non-concave portions 12b and the conductive layer 14, can range from 5 µm to 60 µm, preferably from 7.5 µm to 40 µm, and more preferably from 10 µm to 30 µm. A negative electrode with a step within this range can exhibit excellent resistance improvement effects due to the step, while also improving the energy density of the battery. Here, the step refers to the length in the thickness direction (Z direction).

The concave portions 12a may be formed at regular spacings, or they may be formed with irregular (random) spacings. Additionally, the concave portions 12a can be formed in a uniform shape or in non-uniform shapes.

In a specific embodiment of the present invention, the negative electrode is a high-loading negative electrode, with an average combined loading amount of the first and second negative electrode active material layers of 4 mAh/cm² or more, and more specifically in the range of 4 mAh/cm² to 8 mAh/cm².

In one embodiment of the present invention, the conductive layer 14 may not include a negative electrode active material.

When the conductive layer 14 does not contain a negative electrode active material, lithium ions can move quickly through the conductive layer 14, which can be more advantageous for improving resistance and input/output characteristics. However, because there is no negative electrode active material in the conductive layer 14 to absorb lithium, there is a risk of lithium plating. In such cases, it is preferable to design the horizontal width (X-axis or Y-axis direction) of the conductive layer to be smaller than the horizontal width of the concave portions 12a. Specifically, the horizontal width of the conductive layer 14 can range from 10 µm to 400 µm, preferably from 10 µm to 300 µm, and more preferably from 20 µm to 200 µm.

When the conductive layer 14 does not include a negative electrode active material, the conductive layer 14 may include 80 to 100 parts by weight of a conductive material and up to 20 parts by weight of a binder. The conductive material and binder are not particularly limited and can be known materials used for negative electrodes in lithium secondary batteries. Specific examples of the conductive material include carbon black, graphite, carbon fibers, carbon nanotubes, metal powders, conductive metal oxides, and organic conductive materials, with carbon nanotubes, carbon nanofibers, and carbon black being preferred as conductive materials for the conductive layer.

In another embodiment of the present invention, the conductive layer 14 may further include a negative electrode active material.

When the conductive layer 14 includes a negative electrode active material, the conductive layer contributes to the capacity expression of the negative electrode, providing a more advantageous aspect in terms of high loading of the electrode. Additionally, the presence of a negative electrode active material in the conductive layer 14 allows lithium to be absorbed, reducing the risk of lithium plating.

In one embodiment, the negative electrode active material included in the conductive layer 14 can be the same compound as the second negative electrode active material included in the non-concave portions 12b and can further include the carbon-based first negative electrode active material.

In an exemplary embodiment, the conductive layer 14 may have the same composition as the second negative electrode active material layer. The term "same composition" means that the negative electrode active material, conductive material, and binder comprising the conductive layer 14 and the negative electrode active material, conductive material, and binder comprising the second negative electrode active material layer are the same compound and have the same weight ratio, respectively. When the conductive layer 14 and the second negative electrode active material layer 12 have the same composition, the method of manufacturing the negative electrode can be simpler.

When the conductive layer 14 includes a negative electrode active material, in one embodiment, the wt% of the conductive material included in the conductive layer 14 can be greater than the wt% of the conductive material included in the second negative electrode active material layer 12. In such cases, the excellent electrical conductivity of the conductive layer 14 can mitigate the structural breakdown of the conductive network caused by the volume changes of the negative electrode active material layer.

In one embodiment, the conductive layer 14 may include, relative to 100 parts by weight of the conductive layer, 70 to 94 parts by weight of the negative electrode active material, 5 to 20 parts by weight of the conductive material, and 1 to 10 parts by weight of the binder. In a preferred embodiment, the conductive layer 14 may include 80 to 93 parts by weight of the negative electrode active material, 5.5 to 15 parts by weight of the conductive material, and 2 to 9 parts by weight of the binder. More preferably, it may include 82 to 92 parts by weight of the negative electrode active material, 6 to 10 parts by weight of the conductive material, and 2.5 to 8 parts by weight of the binder.

To control the electrical conductivity of the conductive layer 14 to be greater than that of the second negative electrode active material layer 12, the content of the conductive material in the conductive layer can be increased as described above. Additionally, a conductive material with higher electrical conductivity than that of the conductive material included in the second negative electrode active material layer 12b can be selected as the conductive material for the conductive layer 14.

The current collector 13 may be made of a metal that has high conductivity and allows the slurry of the electrode active material to easily adhere, and it could be any material as long as it is non-reactive within the voltage range of the battery. Specifically, copper, stainless steel, aluminum, nickel, titanium, baked carbon; stainless steel surface-treated with carbon, nickel, titanium, or silver; aluminum-cadmium alloy; non-conductive polymer surface-treated with a conductive material; or conductive polymer can be used. Additionally, the surface may have a fine irregularities to enhance the coupling force of the negative electrode active material. The current collector can be used in various forms such as film, sheet, foil, net, porous body, foam, or nonwoven fabric.

The first negative electrode active material layer 11 may include a carbon-based first negative electrode active material as a negative electrode active material. The carbon-based first negative electrode active material is more structurally stable than the second negative electrode active material included in the second negative electrode active material layer described later, making it preferable as the negative electrode active material included in the lower layer due to its smaller volume change during repeated charging and discharging cycles.

Specifically, both low-crystallinity carbon and high-crystallinity carbon can be used as the carbon-based first negative electrode active material. Representative low-crystallinity carbons include soft carbon and hard carbon. High-crystallinity carbons that can be used include natural graphite, artificial graphite, Kish graphite, pyrolytic carbon, mesophase pitch-based carbon fiber, mesocarbon microbeads, mesophase pitches, and petroleum or coal tar pitch derived cokes. Particularly preferred are graphite-based negative electrode active materials such as natural graphite or artificial graphite, which maintain structural and electrical properties while allowing reversible intercalation and deintercalation of lithium ions.

Typically, to address the issue of insufficient adhesion between the negative electrode active material and the negative electrode current collector, binders are additionally used, or the negative electrode is further rolled. However, increasing the binder content or the degree of rolling can reduce the porosity of the negative electrode active material layer. This reduction in porosity can make it difficult for lithium ions to diffuse from the surface to the interior of the negative electrode active material layer, thereby increasing the resistance of the negative electrode and leading to performance degradation of the secondary battery.

Including natural graphite, which has excellent adhesive properties, or spherical graphite-based negative electrode active materials with high sphericity in the first negative electrode active material layer located between the second negative electrode active material layer and the current collector can improve the adhesion between the negative electrode active material and the current collector without increasing the binder content or the degree of rolling of the negative electrode.

In one embodiment of the present invention, to improve adhesion while maintaining an appropriate range of output characteristics, the first negative electrode active material layer may be composed of natural graphite and/or artificial graphite as the negative electrode active material. To maximize adhesion, the carbon-based first negative electrode active material may particularly be composed of natural graphite.

In one embodiment of the present invention, the graphite-based active material can have an average particle diameter (D₅₀) of 1 µm to 30 µm, specifically 5 µm to 25 µm, and more specifically 7 µm to 23 µm.

When the graphite-based active material included in the first negative electrode active material layer has an average particle diameter within this range, it can achieve an appropriate electrode density while allowing the first negative electrode active material layer to be properly formed on the current collector.

In one embodiment of the present invention, the natural graphite can have a specific surface area of 1.5 m²/g to 8 m²/g, specifically 2.1 m²/g to 4.5 m²/g, and more specifically 2.5 m²/g to 4 m²/g. When the natural graphite has a specific surface area within this range, it can provide adhesion to the negative electrode while preventing an excessive increase in the initial irreversible capacity during charging and discharging due to the specific surface area.

Additionally, the natural graphite may have a tap density of 0.9 g/cc to 1.3 g/cc, specifically 0.92 g/cc to 1.2 g/cc, and more specifically 0.95 g/cc to 1.15 g/cc. When the natural graphite has a tap density within this range, the first negative electrode active material can have adequate adhesion to the negative electrode and achieve excellent energy density.

In one embodiment of the present invention, the artificial graphite may have a specific surface area of 0.4 m²/g to 5.0 m²/g, specifically 0.5 m²/g to 4.0 m²/g, and more specifically 0.6 m²/g to 3.0 m²/g. When the artificial graphite has a specific surface area within this range, it can prevent an increase in the initial irreversible capacity during charging and discharging.

Additionally, the artificial graphite may have a tap density of 0.7 g/cc to 1.1 g/cc, specifically 0.75 g/cc to 1.05 g/cc, and more specifically 0.8 g/cc to 1.0 g/cc. When the artificial graphite has a tap density within this range, the first negative electrode active material may achieve excellent energy density.

In one embodiment of the present invention, the graphite-based negative electrode active material included in the first negative electrode active material layer may have a sphericity of 0.8 or more, preferably 0.85 to 1, and more preferably 0.9 to 1.

The higher the sphericity of the graphite-based negative electrode active material, the better the binder can adhere to the surface of the negative electrode active material. This prevents clumping or agglomeration, allowing for smooth dispersion and improving the overall adhesion of the first negative electrode active material layer.

The sphericity may be a value of the circumference of a circle having the same area as the projected image when the graphite-based negative electrode active material is projected, divided by the perimeter length of the projected image, and may be represented by the following Math Equation 1. The sphericity can be measured using a particle shape analyzer, such as the Sysmex FPIA-3000 from Malvern Instruments. Sphericity = (Circumference of a circle with the same area as the projected image of the graphite-based active material) / (Perimeter of the projected image)

In one embodiment of the present invention, it is preferable that the negative electrode active material included in the first negative electrode active material layer 11 consists solely of the aforementioned carbon-based first negative electrode active material for structural stability and capacity retention of the negative electrode.

In one embodiment of the present invention, the first negative electrode active material layer 11 may have a thickness of 200 µm or less, specifically a thickness of 20 µm to 150 µm, and more specifically a thickness of 30 µm to 100 µm.

When the first negative electrode active material layer has a thickness within the specified range, it can be properly formed on the negative electrode current collector and provide appropriate adhesion between the current collector and the second negative electrode active material layer.

The carbon-based first negative electrode active material maintains structural and electrical properties as a negative electrode active material, allowing for the reversible intercalation and deintercalation of lithium ions. However, due to its lower capacity, it has limitations in manufacturing batteries with high energy density. The present invention addresses this issue by including a second negative electrode active material, which is different from the carbon-based first negative electrode active material, in the second negative electrode active material layer.

In one embodiment of the present invention, the second negative electrode active material may be at least one active material particle selected from the group consisting of transition metals, transition metal oxides, transition metal alloys, oxides of transition metal alloys, and transition metal-containing composites. The transition metal can be any of the Group 14 and Group 15 transition metals. Specifically, the transition metal may be a silicon-based material, tin-based material, or germanium-based material. The transition metals included in the transition metal oxides, transition metal alloys, oxides of transition metal alloys, and transition metal-containing composites may be the aforementioned transition metals.

For example, when the transition metal is a silicon-based material, the second negative electrode active material can be selected from the group consisting of Si, SiOₓ(0<x<2), Si-C composites, and Si metal alloys, or a mixture of one or more of these materials. Specifically, it can be silicon oxide particles (SiOₓ, 0<x< 2), where the silicon oxide particles (SiOₓ, 0 <x< 2) can be a composite of crystalline SiO2 and amorphous Si.

The metal in the Si-metal alloy may be an element selected from the group consisting of alkali metals, alkaline earth metals, Group 13 elements, Group 14 elements, Group 15 elements, Group 16 elements, transition metals, rare earth elements, and combinations thereof, excluding Si. Specific examples of the metal include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

The silicon-based particles can have an average particle diameter (D_{50;}) of 1 µm to 30 µm, specifically 3 µm to 20 µm, and more specifically 4 µm to 10 µm. If the average particle diameter (D₅₀) of the silicon-based particles is too small, side reactions with the electrolyte may increase, resulting in decreased cycle performance. Conversely, if the average particle diameter (D₅₀) is too large, significant volumetric expansion during charging and discharging may cause particle cracking, also leading to decreased cycle performance. Therefore, when the silicon-based particles satisfy the aforementioned size range, the side reactions with the electrolyte and the volumetric expansion of the silicon-based particles can be maintained at an optimal level, thereby providing excellent cycle performance in the battery that includes these particles.

In one embodiment of the present invention, the second negative electrode active material layer can further include the carbon-based first negative electrode active material in addition to the second negative electrode active material. The carbon-based first negative electrode active material included in the second negative electrode active material layer can specifically be one or two materials selected from natural graphite and artificial graphite.

In one embodiment of the present invention, the second negative electrode active material layer 11 may have a thickness of 200 µm or less, specifically a thickness of 20 µm to 150 µm, and more specifically a thickness of 30 µm to 100 µm.

The first negative electrode active material layer and the second negative electrode active material layer can each optionally include binders, conductive materials, fillers, and other additives in addition to the negative electrode active materials.

The binder, which assists in the coupling of active materials and conductive materials and their coupling to the current collector, is not particularly limited. Examples of binders include polyvinylidene fluoride (PVDF), polyvinyl alcohol (PVA), carboxymethyl cellulose (CMC), starch, hydroxypropyl cellulose, regenerated cellulose, polyvinylpyrrolidone (PVP), polytetrafluoroethylene (PTFE), polyethylene (PE), polypropylene (PP), ethylene-propylene-diene monomer (EPDM), sulfonated EPDM, styrene-butadiene rubber (SBR), fluoro rubber, and various copolymers.

The binder can typically be included in an amount of 1 to 30% by weight based on the total weight of the first negative electrode active material layer or the second negative electrode active material layer.

The conductive material is not particularly limited as long as it does not induce chemical changes in the battery and possesses conductivity. Examples include conductive materials such as natural graphite or artificial graphite; carbon black such as acetylene black, Ketjen black, channel black, furnace black, lamp black, and thermal black; conductive fibers such as carbon fibers and metal fibers; conductive tubes such as carbon nanotubes; fluorocarbon; metal powders such as aluminum, and nickel powders; conductive whiskers such as zinc oxide and potassium titanate whiskers; conductive metal oxides such as titanium oxide; and polyphenylene derivatives.

The conductive material can typically be included in an amount of 1 to 30% by weight based on the total weight of the first negative electrode active material layer or the second negative electrode active material layer.

The filler, which is optionally used as a component to suppress the expansion of the electrode, is not particularly limited as long as it is a fibrous material that does not induce chemical changes in the battery. Examples include fibrous materials such as olefin polymers such as polyethylene and polypropylene; glass fibers and carbon fibers.

### [Second Embodiment]

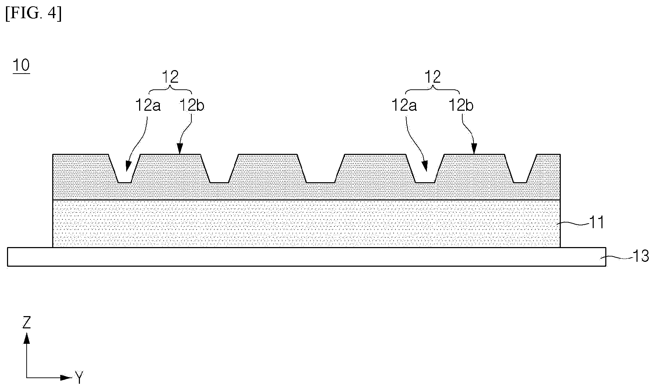

FIG. 3 is a vertical cross-sectional view of a negative electrode according to another embodiment of the present invention, and FIG. 4 is a vertical cross-sectional view of a negative electrode according to yet another embodiment of the present invention.

Referring to these drawings, a negative electrode 10 according to the second embodiment includes: a first negative electrode active material layer 11 formed on the current collector 13; and a second negative electrode active material layer 12 formed on the first negative electrode active material layer 11, wherein the second negative electrode active material layer 12 includes a plurality of concave portions 12a indented toward the first negative electrode active material layer 11 and a plurality of non-concave portions 12b, wherein the concave portion 12a and non-concave portion 12b are alternately arranged in the horizontal direction, wherein the surface of the second negative electrode active material layer has a pattern formed by the steps between the non-concave portion and the concave portion.

The second negative electrode active material layer 12 comprises a plurality of concave portions 12a and a plurality of non-concave portions 12b having steps alternately arranged, creating a step pattern across the entire surface of the second negative electrode active material layer 12. As a result, compared to a negative electrode with a flat surface, the negative electrode according to the present invention has an increased reactive specific surface area of the negative electrode surface. This suppresses the increase in resistance associated with high loading of the negative electrode. Additionally, the stepped spaces on the surface of the second negative electrode active material layer 12 act as buffers against volume changes in the negative electrode active material layers 11, 12, resulting in excellent structural stability.

Specifically, in the negative electrode 10 according to the second embodiment, since the interior of the concave portions 12a is empty, it can be more effective in alleviating the stress caused by the volumetric expansion of the non-concave portions 12b.

The first negative electrode active material layer 11 includes a carbon-based first negative electrode active material, which, despite having a somewhat smaller capacity, offers excellent structural stability. The second negative electrode active material layer 12 may include a second negative electrode active material with high capacity and excellent input/output characteristics. The details of the first and second negative electrode active materials have been described previously, so redundant explanations are omitted.

In exemplary embodiments, the second negative electrode active material layer 12 is disposed on the first negative electrode active material layer 11, covering the surface of the first negative electrode active material layer 11. As a result, the second negative electrode active material layer with excellent input/output characteristics is positioned on the surface of the negative electrode, providing a negative electrode advantageous for rapid charging.

The cross-sectional shape of the concave portions 12a may be an inverted triangular shape as shown in FIG. 3, or a trapezoidal shape as shown in FIG. 4. However, the invention is not limited to these shapes. The concave portion 12a may be formed at regular spacings or at irregular (random) spacings. Additionally, the concave portion 12a may have a uniform shape or a non-uniform shape.

The horizontal width (Y-axis direction) of the non-concave portion 12b may range from 50 to 1500 µm, more specifically from 150 to 1250 µm, and even more specifically from 200 to 1000 µm.

The horizontal width (Y-axis direction) of the concave portion 12a may range from 10 to 800 µm, more specifically from 10 to 600 µm, and even more specifically from 20 to 400 µm, within the range that is less than or equal to the horizontal width of the non-concave portions 12b.

The number of rows of non-concave portions 12b and concave portions 12a may be appropriately selected according to the size of the punched electrode and is not particularly limited. Specifically, they may be arranged in a range of 100 or more rows, more specifically from 200 to 9000 rows, and even more specifically from 200 to 8000 rows.

A plurality of rows of non-concave portions 12b is spaced at predetermined intervals, with concave portions 12a placed between the spaced non-concave portions. Unlike the first embodiment, the interior of the concave portions 12a in this embodiment is unfilled.

The length of the step, which is the difference in thickness between the non-concave portions 12b and the concave portions 12a, can range from 5 µm to the thickness of the non-concave portions 12b. Specifically, it can range from 5 µm to 60 µm, preferably from 7.5 µm to 40 µm, and more preferably from 10 µm to 30 µm. Here, the step may be defined as the difference between the maximum thickness of the non-concave portions 12b and the minimum thickness of the concave portions 12a. A negative electrode with a step within this range can exhibit excellent resistance improvement effects due to the step while also improving the energy density of the battery.

While FIGS. 3 and 4 illustrate embodiments where the second negative electrode active material layer is exposed in the concave portions 12a, the present invention does not exclude embodiments where the first negative electrode active material layer is exposed together with the second negative electrode active material layer. However, since the first negative electrode active material layer has a slower lithium ion diffusion rate compared to the second negative electrode active material layer, it is preferable that the first negative electrode active material layer is either not exposed or has a minimal exposed surface area.

The negative electrode according to the second embodiment of the present invention, being a high-loading negative electrode, may have an average total loading amount of the first and second negative electrode active material layers of 4 mAh/cm² or more, more specifically in the range of 4 mAh/cm² to 8 mAh/cm².

For the negative electrode according to the second embodiment, the details of the current collector, the first negative electrode active material layer, and the second negative electrode active material layer are the same as those for the negative electrode according to the first embodiment, so redundant details are omitted.

### Lithium Secondary Battery

Next, a lithium secondary battery according to the present invention will be described.

A lithium secondary battery according to one embodiment of the present invention may include a positive electrode, a negative electrode, a separator interposed between the positive electrode and the negative electrode, and an electrolyte.

The lithium secondary battery according to the present invention can be manufactured by conventional methods known in the art. For example, it can be manufactured by placing a separator between the positive electrode and the negative electrode and introducing an electrolyte.

**In** the lithium secondary battery, the negative electrode is as described above. For instance, the negative electrode may include: a first negative electrode active material layer formed on one or both surfaces of the current collector, and including a first negative electrode active material, a carbon-based compound, as a negative electrode active material; and a second negative electrode active material layer formed on the first negative electrode active material layer, and including a second negative electrode active material different from the carbon-based compound as a negative electrode active material, wherein the second negative electrode active material layer includes a plurality of concave portions indented toward the first negative electrode active material layer and a plurality of non-concave portions, wherein the concave portion and non-concave portion are alternately arranged in the horizontal direction, and the concave portion is filled with a conductive layer including a conductive material, wherein the thickness of the conductive layer filled in the concave portion is smaller than the thickness of the non-concave portion, and the surface of the second negative electrode active material layer has a pattern formed by the steps between the conductive layer and the non-concave portion.

Additionally, the negative electrode may be a negative electrode including: a first negative electrode active material layer formed on one or both surfaces of the current collector, and including a first negative electrode active material, a carbon-based compound, as a negative electrode active material; and a second negative electrode active material layer formed on the first negative electrode active material layer, and including a second negative electrode active material different from the carbon-based compound as a negative electrode active material, wherein the second negative electrode active material layer includes a plurality of concave portions indented toward the first negative electrode active material layer and a plurality of non-concave portions, wherein the concave portion and non-concave portion are alternately arranged in the horizontal direction, wherein the surface of the second negative electrode active material layer has a pattern formed by the steps between the non-concave portion and the concave portion.

The first negative electrode active material layer 11 includes a carbon-based first negative electrode active material, which, despite having a somewhat smaller capacity, offers excellent structural stability. The second negative electrode active material layer 12 may include a second negative electrode active material with high capacity and excellent input/output characteristics.

The positive electrode may include a positive electrode current collector and a positive electrode active material layer including a positive electrode active material and formed on the positive electrode current collector.

The positive electrode current collector is not particularly limited as long as it does not induce chemical changes in the battery and possesses conductivity. Examples include stainless steel, aluminum, nickel, titanium, baked carbon, or surface-treated materials such as aluminum or stainless steel treated with carbon, nickel, titanium, or silver. The positive electrode current collector typically has a thickness of 3 to 500 µm and may have fine irregularities on the surface to enhance the adhesion of the positive electrode active material. It can be used in various forms such as film, sheet, foil, net, porous body, foam, or nonwoven fabric.

The positive electrode active material is not particularly limited and can include any compound known in the art capable of reversible intercalation and deintercalation of lithium. Specifically, the positive electrode active material may include: layered compounds such as lithium cobalt oxide (LiCoO₂), lithium nickel oxide (LiNiO₂), or compounds substituted with one or more transition metals; lithium manganese oxide of the formula Li₁₊ₓMn₂₋ₓO₄ (wherein x is 0 to 0.33); lithium manganese oxides, such as LiMnO₃, LiMn₂O₃, LiMnO₂; lithium copper oxide (Li₂CuO₂); vanadium oxides, such as LiV₃O₈, LiV₃O₄, V₂O₅, Cu₂V₂O; Ni site-type lithium nickel oxide represented by the formula LiNi₁₋ₓMₓO₂ (wherein M = Co, Mn, Al, Cu, Fe, Mg, B, or Ga, and x = 0.01 to 0.3); lithium manganese complex oxide represented by the formula LiMn₂₋ₓMₓO₂ (where M = Co, Ni, Fe, Cr, Zn, or Ta, and x = 0.01 to 0.1) or Li₂Mn₃MO₈ (where M = Fe, Co, Ni, Cu, or Zn); lithium manganese complex oxide with a spinel structure, represented by LiNiₓMn₂₋ₓO₄; LiMn₂O₄, in which a portion of the Li in the formula is substituted by an alkaline earth metal ion; disulfide compounds; lithium iron phosphate, represented by LiFePO₄; disulfide compounds; Fe₂(MoO₄)₃, and etc., but it is not limited thereto.

However, since improving energy density is important for the batteries to which the present invention is applied, the positive electrode active material can be a lithium transition metal oxide with high nickel (Ni) content represented by the following Chemical Formula 1.

Li₁₊ₓNiₐCo_{b}Mn_{c}M_{1-(a+b+c)}O_{2-y}A_{y} (1)

In the above formula:
M is at least one selected from the group consisting of Cu, Ti, Mg, Al, Pt, and Zr,
A is an oxygen-substituting halogen,
0≤x≤0.5, 0.8≤a≤1, 0≤b≤0.2, 0≤c≤0.2, 0.9≤a+b+c≤1, and 0≤y≤0.001.

More specifically, in the above Chemical Formula 1, a can be in the range of 0.88≤a<1

Additionally, the lithium transition metal oxide represented by Chemical Formula 1 can be mixed with other active materials.

The positive electrode active material layer can include, along with the aforementioned positive electrode active material, a positive electrode conductive material and a positive electrode binder.

The positive electrode conductive material is used to impart conductivity to the electrode and may include carbon black, graphite, carbon fibers, carbon nanotubes, metal powders, conductive metal oxides, or organic conductive materials. Commercially available conductive materials include acetylene black series (e.g., products from Chevron Chemical Company or Gulf Oil Company), Ketjen Black EC series (e.g., products from Armak Company), Vulcan XC-72 (e.g., products from Cabot Company), and Super P (e.g., products from MMM Company). Among these, carbon nanotubes, carbon nanofibers, and carbon black are preferred conductive materials for the invention, with carbon nanotubes being the most preferred. The conductive network of carbon nanotubes can alleviate binder migration during the drying process of the positive electrode slurry, making carbon nanotubes the most desirable conductive material for the positive electrode in the present invention.

The BET specific surface area of the carbon nanotubes may range from 100 m²/g to 1000 m²/g, specifically from 150 m²/g to 800 m²/g, from 150 m²/g to 500 m²/g, from 150 m²/g to 300 m²/g, or from 150 m²/g to 200 m²/g.

The positive electrode conductive material can be included in an amount of 0.1 to 30wt%, specifically 0.1 to 10wt%, and more specifically 0.5 to 5wt% in positive electrode active material layer.

The positive electrode binder can be any binder polymer commonly used without limitation. Examples include various binder polymers such as polyvinylidene fluoride-hexafluoropropylene (PVDF-co-HFP), polyvinylidene fluoride (PVDF), polyacrylonitrile, polymethyl methacrylate, styrene-butadiene rubber (SBR), carboxyl methyl cellulose (CMC), and etc.

The positive electrode binder can be included in an amount of 0.1 to 30wt%, specifically 0.1 to 10wt%, and more specifically 0.5 to 5wt% in the positive electrode active material layer.

The separator can be any porous substrate commonly used as a separator in lithium secondary batteries. Examples include polyolefin-based porous membranes or nonwoven fabrics, but are not particularly limited to these. It is particularly preferable that the separator exhibits low resistance to ion movement and excellent electrolyte wetting ability.

Examples of polyolefin-based porous membranes include membranes formed from polymers such as high-density polyethylene, linear low-density polyethylene, low-density polyethylene, ultra-high molecular weight polyethylene, polypropylene, polybutylene, and polypentene, either alone or in combination.

In addition to polyolefin-based nonwoven fabrics, the nonwoven fabric may include nonwoven fabrics formed from polymers such as polyethyleneterephthalate, polybutyleneterephthalate, polyester, polyacetal, polyamide, polycarbonate, polyimide, polyetheretherketone, polyethersulfone, polyphenylene oxide, polyphenylene sulfide, and polyethylene naphthalene, either alone or in combination. The structure of the nonwoven fabric can be spunbond nonwoven fabric or melt-blown nonwoven fabric made from long fibers.

The thickness of the porous substrate is not particularly limited but can range from 5 to 50 µm. The pore size and porosity of the porous substrate are also not particularly limited but can range from 0.01 to 50 µm and 10 to 95%, respectively.

Meanwhile, to improve the mechanical strength of the separator made of the porous substrate and to prevent short circuits between the positive and negative electrodes, a porous coating layer containing inorganic particles and binder polymers can be further included on at least one surface of the porous substrate.

Meanwhile, in the lithium secondary battery, the electrolyte may include an organic solvent and a lithium salt, which are typically used in electrolytes, without particular limitation.

The organic solvent may be used without limitation as long as it is a medium through which ions involved in the electrochemical reactions of the battery can move. Specifically, examples of the organic solvent include: ester solvents such as methyl acetate, ethyl acetate, γ-butyrolactone, ε-caprolactone; ether solvents such as dibutyl ether or tetrahydrofuran; ketone solvents such as cyclohexanone; aromatic hydrocarbon solvents such as benzene, fluorobenzene; carbonate solvents such as dimethyl carbonate (DMC), diethyl carbonate (DEC), methylethyl carbonate (MEC), ethylmethyl carbonate (EMC), ethylene carbonate (EC), propylene carbonate (PC).

Among these, carbonate solvents are preferred. More specifically, a mixture of cyclic carbonates (e.g., ethylene carbonate or propylene carbonate) with high ion conductivity and high dielectric constant, which can enhance the charge/discharge performance of the battery, and linear carbonate compounds (e.g., ethyl methyl carbonate, dimethyl carbonate, or diethyl carbonate) with low viscosity is more preferred.

The lithium salt may be used without limitation as long as it is any compound that can provide lithium ions used in lithium secondary batteries. Specifically, the lithium salt may include: LiPF₆, LiClO₄, LiAsF₆, LiBF₄, LiSbF₆, LiAlO₂, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂. It is preferable that the lithium salt is included in the electrolyte in a concentration range of about 0.6mol% to 2mol%.

In addition to the electrolyte components mentioned above, the electrolyte may also include one or more additives for the purposes of improving battery life characteristics, preventing battery capacity degradation, and enhancing discharge capacity. Examples of such additives include pyridine, triethyl phosphate, triethanolamine, cyclic ether, ethylenediamine, n-glyme, hexamethylphosphoramide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride. These additives may be included in an amount of 0.1 to 5 wt% based on the total weight of the electrolyte.

The lithium secondary battery of the present invention can be manufactured by forming an electrode assembly with a separator placed between the positive electrode and the negative electrode, placing the electrode assembly in a cylindrical or prismatic battery case, and then injecting the electrolyte. Alternatively, the electrode assembly can be stacked, impregnated with the electrolyte, and then the resulting product can be placed in a battery case and sealed to complete the manufacturing process.

During the manufacturing of the lithium secondary battery of the present invention, the electrode assembly can be dried to remove one or more organic solvents used in the preparation of the positive electrode. These solvents can be selected from the group consisting of N-methyl-2-pyrrolidone (NMP), acetone, ethanol, propylene carbonate, ethyl methyl carbonate, ethylene carbonate, and dimethyl carbonate. If the electrolyte used contains the same components as the organic solvents used in the positive electrode preparation, the drying process for the electrode assembly can be omitted. Unlike the lithium secondary battery described above, the lithium secondary battery according to other embodiments of the present invention may be an all-solid-state battery.

The battery case may be any conventionally used in the art, and is not limited in shape depending on the intended use of the battery, and may be, for example, cylindrical, prismatic, pouch-type, or coin-shaped using a can.

The lithium secondary battery according to the present invention exhibits excellent resistance characteristics, discharge capacity, output characteristics, and capacity retention, making it useful for portable devices such as mobile phones, laptops, digital cameras, energy storage systems (ESS), and electric vehicles such as hybrid electric vehicles (HEV).

### Method for Manufacturing Negative Electrode for Lithium Secondary Battery

Next, the method for manufacturing the negative electrode for a lithium secondary battery according to the present invention will be described.

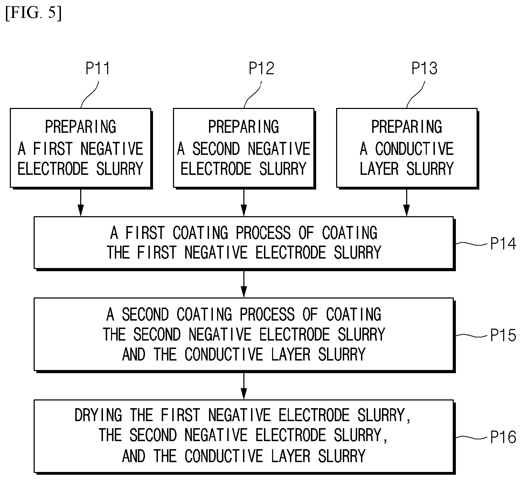

FIG. 5 is a flowchart illustrating the method for manufacturing a negative electrode for a lithium secondary battery according to one embodiment of the present invention.

Referring to FIG. 5, the method for manufacturing the negative electrode according to one embodiment includes: preparing a first negative electrode slurry P11; preparing a second negative electrode slurry P12; preparing a conductive layer slurry P13; a first coating process of coating the first negative electrode slurry P14; a second coating process of coating the second negative electrode slurry and the conductive layer slurry P15; and drying the first negative electrode slurry, the second negative electrode slurry, and the conductive layer slurry P16.

The method for manufacturing the negative electrode is intended to produce the negative electrode according to the first embodiment described above. It is characterized by the secondary coating process, where the second negative electrode slurry and the conductive layer slurry are coated in an alternating arrangement in the horizontal direction. That is, the second negative electrode slurry is coated with a plurality of rows at predetermined spacings, and the conductive layer slurry is also coated with a plurality of rows at predetermined spacings, but the second negative electrode slurry and the conductive layer slurry are alternately arranged.

The second negative electrode slurry coated in a plurality of rows is dried to form the non-concave portions 12b of the second negative electrode active material layer, and the conductive layer slurry coated in a plurality of rows is dried to form the conductive layer 14. The conductive layer 14 fills part of the concave portions 12a, which are the spaced areas between the spaced non-concave portions and adjacent non-concave portions.

This method of manufacturing the negative electrode, unlike the method that forms patterns on the surface of the negative electrode active material layer through laser etching to be discussed below, has the advantage of not losing any of the negative electrode active material layer, thereby reducing manufacturing costs.

The process for preparing P11 the first negative electrode slurry may include mixing and stirring a carbon-based first negative electrode active material, a conductive material, and a binder in a solvent. The carbon-based first negative electrode active material, compared to the second negative electrode active material, has excellent structural stability, making it less likely to deintercalate from the current collector. Therefore, it is preferable as the active material in the first negative electrode slurry to form the first negative electrode active material layer, which is closer to the current collector.

The carbon-based first negative electrode active material, the conductive material, and the binder included in the first negative electrode slurry have been described in detail above, so redundant explanations are omitted.

The process for preparing P12 the second negative electrode slurry may include mixing and stirring a second negative electrode active material, a conductive material, and a binder in a solvent.

The carbon-based first negative electrode active material can maintain structural and electrical properties as a negative electrode active material, allowing reversible intercalation and deintercalation of lithium ions, but it has limitations in manufacturing high energy density batteries due to its low capacity. Therefore, by including a type of second negative electrode active material different from the carbon-based first negative electrode active material in the second negative electrode slurry to form the second negative electrode active material layer, it is possible to manufacture a negative electrode suitable for high energy density batteries.

The second negative electrode active material, conductive material, and binder included in the second negative electrode slurry have been described in detail above, so redundant explanations are omitted.

The process for preparing P13 the conductive layer slurry includes mixing and stirring the electrode materials in a solvent.
As previously mentioned, the conductive layer may or may not include a negative electrode active material. In one embodiment, the conductive layer slurry can include a negative electrode active material, while in another embodiment, it may not include a negative electrode active material.

In an embodiment in which the conductive layer slurry includes a negative electrode active material, the conductive layer slurry may include the same compound as the second negative electrode active material included in the second negative electrode slurry and may further include the carbon-based first negative electrode active material.

In an embodiment in which the conductive layer slurry includes a negative electrode active material, the conductive layer slurry and the second negative electrode slurry can have the same composition. By having the same composition, it is meant that the negative electrode active material, conductive material, and binder comprising the conductive layer 14 and the negative electrode active material, conductive material, and binder comprising the second negative electrode active material layer are each the same compound and have the same weight ratio.

In an embodiment in which the conductive layer slurry includes a negative electrode active material, the wt% of the conductive material in the solids content of the conductive layer slurry can be higher than the wt% of the conductive material in the solids content of the second negative electrode slurry.

The conductive layer slutty may not include a negative electrode active material to maximize the buffering effect against the volume changes of the second negative electrode active material layer. In this embodiment, the conductive layer slurry may include 80 to 100 parts by weight of a conductive material and 20 parts by weight or less of a binder in the solids content.

The conductive material and binder have been detailed above, so redundant explanations are omitted.

The solvent used to prepare the first negative electrode slurry, the second negative electrode slurry, and the conductive layer slurry may be any solvent commonly used in the technical field. Examples include dimethyl sulfoxide (DMSO), isopropyl alcohol, N-methylpyrrolidone (NMP), acetone, or water, and one or more of these alone or a mixture of two or more of these may be used.

Meanwhile, to form the step between the non-concave portions of the second negative electrode active material layer formed from the second negative electrode slurry and the conductive layer formed from the conductive layer slurry, the solids content in the second negative electrode slurry can be higher than the solids content in the conductive layer slurry. Accordingly, the thickness of the second negative electrode active material layer formed from the second negative electrode slurry after drying may be greater than the thickness of the conductive layer formed from the conductive layer slurry. In other words, the level of the step between the non-concave portion and the conductive layer may be controlled by adjusting the respective solid content of the second negative electrode slurry and the conductive layer slurry.

The first coating process P14 involves coating the first negative electrode slurry onto the current collector 13. The coating method for the first negative electrode slurry is not limited and can use any coating method commonly used in the technical field. For example, the first negative electrode slurry can be coated using a slot-die coater.

The second coating process P15 involves coating the second negative electrode slurry and the conductive layer slurry onto the first negative electrode slurry. The second coating process P15 can be performed either without drying the first negative electrode slurry after the first coating process P14 or after drying the first negative electrode slurry following the first coating process P14.

In the second coating process P15, the second negative electrode slurry can be coated in a plurality of rows along the cross direction (CD) at predetermined spacings with a predetermined width. The coating width of one row of the second negative electrode slurry can range from 50 to 1500 µm, more specifically from 150 to 1250 µm, and even more specifically from 200 to 1000 µm.

In the second coating process P15, the conductive layer slurry may be coated in a plurality of rows so as to have a predetermined width length at predetermined spacings along the cross direction (CD). The coating width of the conductive layer slurry in one row may be in the range of 10 µm to 800 µm, more particularly in the range of 10 µm to 600 µm, more particularly in the range of 20 µm to 400 µm, within the range of the coating width of the second negative electrode slurry. On the other hand, if the second negative electrode slurry does not include a negative electrode active material, the coating width of the conductive layer slurry may be even smaller. Specifically, the coating width of the conductive layer slurry may range from 10 µm to 400 µm, preferably from 10 µm to 300 µm, and even more preferably from 20 µm to 200 µm.

In one embodiment, the coating width of the conductive layer slurry matches the coating spacing of the second negative electrode slurry, so that the first negative electrode slurry or the first negative electrode composite layer is almost covered by the second negative electrode slurry and the conductive layer slurry, which is preferable in terms of the capacity and input/output characteristics of the negative electrode.

In one embodiment of the present invention, the second coating process P15 can use a nozzle printer to alternately coat the second negative electrode slurry and the conductive layer slurry.

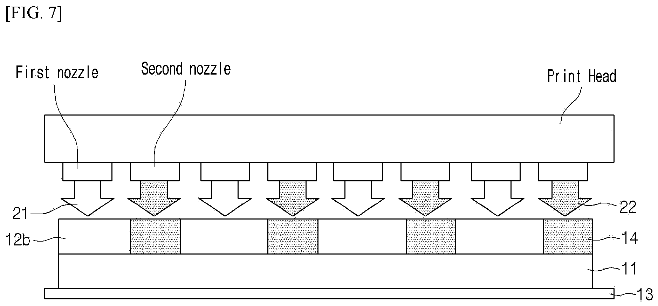

FIG. 7 illustrates the second coating process. As shown in FIG. 7, a nozzle printer is used as the coating equipment to simultaneously coat the second negative electrode slurry and the conductive layer slurry.

Referring to FIG. 7, the nozzle printer can continuously dispense the second negative electrode slurry 21 and the conductive layer slurry 22 in line units of a predetermined width. Because it is easy to control the coating width according to the coating speed, the nozzle printer is preferred as a coating device for alternately pattern coating the second negative electrode slurry and the conductive layer slurry. The nozzle printer can include two or more nozzles, and the second negative electrode slurry 21 and the conductive layer slurry 22 can be discharged from each of the plurality of nozzles (First nozzle, Second nozzle). The second negative electrode slurry 21 is dried to form the non-concave portions 12b of the second negative electrode active material layer, and the conductive layer slurry 22 is dried to form the conductive layer 14.

In exemplary embodiments, the ratio of the total loading amount of the second negative electrode slurry and the conductive layer slurry to the loading amount of the first negative electrode slurry can range from 3:1 to 1:3, specifically from 2:1 to 1:2, and more specifically from 6:4 to 4:6. When the ratio of the loading amounts is within these ranges, the negative electrode exhibits excellent structural stability and rate characteristics.

The drying process P16 is a process of drying to remove solvent in the first negative electrode slurry, the second negative electrode slurry, and the conductive layer slurry, and the drying process may be performed after the first and second coating processes, or the first negative electrode slurry, the second negative electrode slurry, and the conductive layer slurry may be dried at once, or the drying process may be performed after the first coating process and after the second coating process, respectively.

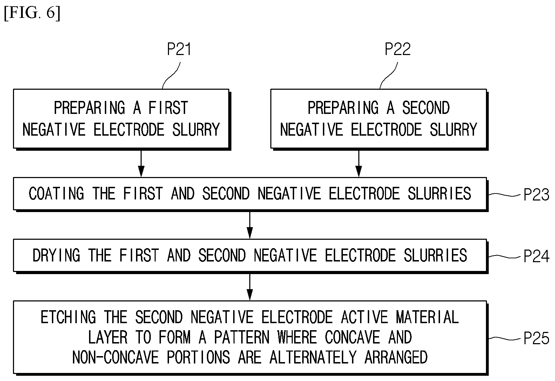

FIG. 6 is a flowchart illustrating another embodiment of the method for manufacturing a negative electrode according to the present invention.

Referring to FIG. 6, the method for manufacturing a negative electrode according to another embodiment of the present invention includes: preparing a first negative electrode slurry P21; preparing a second negative electrode slurry P22; coating the first and second negative electrode slurries P23; drying the first and second negative electrode slurries P24; etching the second negative electrode active material layer to form a pattern where concave and non-concave portions are alternately arranged P25.

The processes for preparing the first negative electrode slurry P21 and the second negative electrode slurry P22 are the same as described in the previously mentioned embodiment, so redundant explanations are omitted.

The process P23 for coating the first and second negative electrode slurries involves coating the slurries onto the current collector. The second negative electrode slurry can be coated after the first negative electrode slurry, or both slurries can be simultaneously coated using equipment such as a dual slot-die configured to discharge both slurries simultaneously.

In exemplary embodiments, the ratio of the loading amounts of the first negative electrode slurry to the second negative electrode slurry can range from 3:1 to 1:3, specifically from 2:1 to 1:2, and more specifically from 6:4 to 4:6. When the ratio of the loading amounts is within these ranges, the negative electrode exhibits excellent structural stability and rate characteristics.

The drying process P24 involves drying the first and second negative electrode slurries. The first negative electrode slurry can be coated and dried first, followed by coating and drying the second negative electrode slurry. Alternatively, the first and second negative electrode slurries can be simultaneously coated and then dried together.

The drying process P24 can be performed using conventional methods well known in the technical field.

The patterning process P25 involves forming a pattern of alternating concave and non-concave portions on the surface of the second negative electrode active material layer. This is achieved by irradiating the dried second negative electrode active material layer with a laser to form concave portions indented towards the first negative electrode active material layer.

The areas irradiated by the laser is deintercalated from the second negative electrode active material layer, forming concave portions 12a that are indented towards the first negative electrode active material layer, as shown in FIGS. 3 and 4.

The details regarding the width direction length of the non-concave portions 12b and the concave portions have been described above, so redundant explanations are omitted.

Hereinafter, the present invention will be described in more detail with reference to examples. However, these examples are intended to illustrate the invention and are not intended to limit the scope of the invention.

### Example 1: Preparation of the Negative Electrode

### (Preparation of the First Negative Electrode Slurry)

A first negative electrode slurry was prepared by mixing and stirring natural graphite with a sphericity of 0.9 (D₅₀ 15 µm) as the negative electrode active material, styrene-butadiene rubber (SBR) as the binder, carboxymethyl cellulose (CMC) as the thickener, and carbon nanotubes as the conductive material in a weight ratio of 94:3:1.5:1.5 in water (solid content: 50 wt%).

### (Preparation of the Second Negative Electrode Slurry)

A negative electrode active material was prepared consisting of 10 wt% natural graphite with a sphericity of 0.9 (D₅₀ 16 µm, specific surface area 3.0 m²/g, tap density 1.1 g/cc), 85 wt% artificial graphite with a sphericity of 0.85 (D₅₀ 23 µm, specific surface area 1.0 m²/g, tap density 0.9 g/cc), and 5 wt% silicon oxide particles (SiOₓ, 0<x<2) with an average particle diameter (D₅₀) of 6 µm. This negative electrode active material, styrene-butadiene rubber (SBR) as the binder, carboxymethyl cellulose (CMC) as the thickener, and carbon nanotubes as the conductive material were mixed and stirred in water in a weight ratio of 95:2:1.5:1.5 to prepare the second negative electrode slurry (solid content: 50 wt%).

### (Preparation of the Negative Electrode)

The first and second negative electrode slurries were simultaneously coated onto a copper current collector with a thickness of 20 µm using a dual slot-die coater. The first negative electrode slurry was coated onto the copper current collector, followed by the second negative electrode slurry coated on top of the first. The loading ratio of the first negative electrode slurry to the second negative electrode slurry was 1:1. The coated layers were then dried and rolled at a temperature of 80-90°C.

On the second negative electrode active material layer formed by drying the second negative electrode slurry after rolling, a laser was used to etch a width length of 30 µm at intervals of 200 µm to form a concave portion inwardly indented toward the first negative electrode active material layer. In the prepared negative electrode, the total thickness of the negative electrode active material layer was 110 µm, and the step between the concave and non-concave portions was 31 µm.

### Example 2: Preparation of the Negative Electrode

### (Preparation of the First and Second Negative Electrode Slurries)

The first and second negative electrode slurries were prepared in the same manner as described in Example 1.

### (Preparation of the Conductive Layer Slurry)

A slurry with the same composition as the second negative electrode slurry was prepared, and only the solids content was changed to 40 wt%.

### (Preparation of the Negative Electrode)

The first negative electrode slurry was coated onto a copper current collector with a thickness of 20 µm using a single slot-die coater and dried to form the first negative electrode active material layer. Using a nozzle printer, the second negative electrode slurry and the conductive layer slurry were simultaneously coated onto the first negative electrode active material layer. The second negative electrode slurry and the conductive layer slurry were alternately arranged along the width direction (CD) of the current collector, with the horizontal width of one row of the second negative electrode slurry being 200 µm and the horizontal width of one row of the conductive layer slurry being 20 µm. Here, the loading amount ratio of the first negative electrode slurry to the second negative electrode slurry and the conductive layer slurry was set to 1:1. The coated layers were then dried and rolled at a temperature of 80-90°C to prepare the negative electrode.

In the manufactured negative electrode, the total thickness of the negative electrode active material layer was 110 µm, and the step between the non-concave portions formed by the dried second negative electrode slurry and the conductive layer formed by the dried conductive layer slurry was 31 µm.

### Comparative Example: Preparation of the Negative Electrode

### (Preparation of the First and Second Negative Electrode Slurries)

The first and second negative electrode slurries were prepared in the same manner as described in Example 1.

The first and second negative electrode slurries were simultaneously coated onto a copper current collector with a thickness of 20 µm using a dual slot-die coater. The first negative electrode slurry was coated onto the copper current collector, and the second negative electrode slurry was coated on top of the first negative electrode slurry. The loading amount ratio of the first negative electrode slurry to the second negative electrode slurry was 1:1. The coated layers were then dried and rolled at a temperature of 80-90°C to prepare a negative electrode with a total thickness of the negative electrode active material layer of 110 µm.

### Experimental Example 1: Evaluation of Capacity Retention Rate Over Cycles

### (Preparation of Half Cells)

Lithium (Li) metal foil was used as the positive electrode. Each of the negative electrodes prepared in Examples 1 and 2, and the Comparative Example, were used as the negative electrode. A polyethylene separator (thickness 20 µm) was placed between the positive electrode and each of the negative electrodes to assemble the electrode assemblies. These electrode assemblies were inserted into pouch-type battery cases, and an electrolyte was injected to prepare half cells. The electrolyte used was a solution of 1M LiPF6 dissolved in an organic solvent composed of ethylene carbonate (EC) and ethyl methyl carbonate (EMC) in a 30:70 volume ratio.

### (Evaluation of Capacity Retention Rate)

Each half cell prepared using the negative electrodes from Examples 1 and 2 and the Comparative Example was subjected to 500 charge-discharge cycles under the following conditions at a temperature of 25°C. The capacity retention rate was calculated using the following formula and the results are shown in Table 1.
Charge: 0.7C CC/CV, 4.2V, 0.05C cut-off
Discharge: 0.5C, CC, 2.5V cut-off

The capacity retention rates were calculated as follows, and the results are shown in Table 1. Capacity Retention Rate (%) = (Discharge capacity at cycle 500) / (Discharge capacity at cycle 1) × 100

### Experimental Example 2: Measurement of Constant Current Charge Capacity Ratio

Half cells were prepared in the same manner as described in Experimental Example 1. Each half cell prepared using the negative electrodes from Examples 1 and 2 and the Comparative Example was charged at 0.5C constant current (CC) until the voltage reached 4.2V, at which point the charging was cut off and the CC charge capacity was measured. Subsequently, constant voltage (CV) charging was performed until the current dropped to 0.02C, and the CC-CV charge capacity was measured. The constant current charge capacity ratio was calculated using the following formula. A higher constant current charge capacity ratio indicates better resistance characteristics and rate characteristics (charging speed). Constant Current Charge Capacity Ratio (%) =(CC Charge Capacity/CC-CV Charge Capacity)×100

The charging rates were then changed to 1.0C and 2.0C, and the same process was repeated to calculate the constant current charge capacity ratio. The results are shown in Table 1.

**[Table 1]**

| | Capacity Retention Rate (%) | Constant Current Charge Capacity Ratio (%) | | |
|---|---|---|---|---|
| | | 0.5C | 1.0C | 2.0C |
| Example 1 | 89 | 87 | 67 | 35 |
| Example 2 | 90 | 88 | 70 | 40 |
| Comparative Example | 70 | 70 | 28 | 5 |

Referring to Table 1, the half cells containing the negative electrodes according to Examples 1 and 2 demonstrated superior capacity retention rate and constant current charge capacity ratio compared to the half cells containing the negative electrode according to the Comparative Example.

### Experimental Example 3: Evaluation of Resistance Characteristics

### (Preparation of the Positive Electrode)

A positive electrode slurry was prepared by mixing and stirring LiNi0.8Co0.1Mn0.1O2 as the positive electrode active material, carbon black as the conductive material, and PVDF as the binder in N-methyl-2-pyrrolidone (NMP) solvent at a weight ratio of 97:1.5:1.5.

The positive electrode slurry was coated onto an aluminum current collector with a thickness of 20 µm, then dried and rolled at 130°C to prepare the positive electrode.

### (Preparation of the Full Cell)

An electrode assembly was prepared by interposing a separator (20 µm thick) made of polyethylene between each negative electrode of Examples 1 and 2 and Comparative Example and the positive electrode. The electrode assembly was inserted into a pouch-type battery case, and an electrolyte was added to prepare a full cell. The electrolyte was 1 M of LiPF6 dissolved in an organic solvent composed of ethylene carbonate (EC) and ethyl methyl carbonate (EMC) in a volume ratio of 30:70.

### (DCIR Measurement)

When each full cell was charged to SOC 50% at room temperature and discharged to 2.5C for 10 seconds, the voltage drop was recorded, and the resistance (mOhm) of each coin-type full cell was measured using R=V/I. The results are shown in Table 2.
Charge: 0.5C CC/CV, 4.2V, 0.05C cut-off
Discharge: 0.5C CC, 2.5V cut-off

### Experimental Example 4: Evaluation of Fast Charging Performance

Each of the full cells was charged to 4.2V at a temperature of 25 degrees Celsius with a constant current of 0.33C, charged to a current value of 0.05C at a constant voltage of 4.2V, and discharged to 2.5V with a constant current of 0.33C after a 10-minute rest period.

Then, it was charged as above and discharged to 2.5V with a constant current of 2C to evaluate the discharge rate characteristics, and the results are shown in Table 2.

**[Table 2]**

| | DCIR(mohm) | Rate Characteristics(%) |
|---|---|---|
| | | 0.33C/2.0C vs.0.33C/0.33C |
| Example 1 | 1.02 | 75 |
| Example 2 | 1.01 | 78 |
| Comparative Example | 1.1 | 67 |

Referring to Table 2, in the case of the negative electrodes according to Examples 1 and 2, since the second negative electrode active material layer has a patterned negative electrode surface with alternating concave and non-concave portions, the full cell prepared using the negative electrode according to Examples 1 and 2 had superior resistance characteristics and rate characteristics compared to the full cell prepared using the negative electrode of the Comparative Example.

The present invention has been described in detail with reference to the drawings and examples. However, the configurations described in the drawings or examples are merely exemplary embodiments of the invention and do not represent the entire technical idea of the invention, so it should be understood that various equivalents and modifications can be made to replace these at the time of filing the application.

### [Reference numerals]

10: NEGATIVE ELECTRODE
11: FIRST NEGATIVE ELECTRODE ACTIVE MATERIAL LAYER
12: SECOND NEGATIVE ELECTRODE ACTIVE MATERIAL LAYER
12a: CONCAVE PORTION
12b: NON-CONCAVE
PORTION
13: CURRENT COLLECTOR

## Claims

1. A negative electrode for a lithium secondary battery comprising:
a current collector;
a first negative electrode active material layer formed on one or both surfaces of the current collector, and including a first negative electrode active material, which is a carbon-based compound, as a negative electrode active material; and
a second negative electrode active material layer formed on the first negative electrode active material layer, and including a second negative electrode active material different from the carbon-based compound as a negative electrode active material,
wherein the second negative electrode active material layer includes a plurality of concave portions indented toward the first negative electrode active material layer and a plurality of non-concave portions, wherein the plurality of the concave portions and the plurality of the non-concave portions are alternately arranged in a horizontal direction, and
wherein the plurality of the concave portions are filled with a conductive layer including a conductive material,
wherein a thickness of the conductive layer filled in the plurality of concave portions is smaller than a thickness of the plurality of the non-concave portions, and a surface of the second negative electrode active material layer has a pattern formed by a plurality of steps between the conductive layer and the plurality of the non-concave portions.

2. The negative electrode for a lithium secondary battery according to claim 1,
wherein the conductive layer further includes a negative electrode active material.

3. The negative electrode for a lithium secondary battery according to claim 2,
wherein the conductive layer comprises a same composition as the second negative electrode active material layer.

4. The negative electrode for a lithium secondary battery according to claim 2,
wherein a wt% of the conductive material included in the conductive layer is greater than a wt% of the conductive material included in the second negative electrode active material layer.

5. The negative electrode for a lithium secondary battery according to claim 4,
wherein the conductive layer comprises:
70 to 94 parts by weight of the negative electrode active material;
5 to 20 parts by weight of the conductive material; and
1 to 10 parts by weight of a binder.

6. The negative electrode for a lithium secondary battery according to claim 1,
wherein the conductive layer does not comprise a negative electrode active material, and comprises:
80 to 100 parts by weight of the conductive material and
20 parts by weight or less of a binder.

7. A negative electrode for a lithium secondary battery comprising:
a current collector;
a first negative electrode active material layer formed on one or both surfaces of the current collector, and including a first negative electrode active material, which is a carbon-based compound, as a negative electrode active material; and
a second negative electrode active material layer formed on the first negative electrode active material layer, and including a second negative electrode active material different from the carbon-based compound as a negative electrode active material,
wherein the second negative electrode active material layer includes a plurality of concave portions indented toward the first negative electrode active material layer and a plurality of non-concave portions, wherein the plurality of the concave portions and the plurality of the non-concave portions are alternately arranged in a horizontal direction,
wherein the surface of the second negative electrode active material layer has a pattern formed by a plurality of steps between the plurality of the non-concave portions and the plurality of the concave portions.

8. The negative electrode for a lithium secondary battery according to any one of claims 1 to 7,
wherein a horizontal width of each of the plurality of the non-concave portions ranges from 50 µm to 1500 µm.

9. The negative electrode for a lithium secondary battery according to any one of claims 1 to 7,
wherein a horizontal width of each of the plurality of the concave portions ranges from 10 µm to 800 µm, and
wherein the horizontal width of each of the plurality of the concave portions is less than or equal to a horizontal width of the plurality of the non-concave portions.

10. The negative electrode for a lithium secondary battery according to any one of claims 1 to 7,
wherein a length of the plurality of steps ranges from 5 µm to 60 µm.

11. The negative electrode for a lithium secondary battery according to any one of claims 1 to 7,
wherein the first negative electrode active material included in the first negative electrode active material layer is composed of a carbon-based first negative electrode active material.

12. The negative electrode for a lithium secondary battery according to any one of claims 1 to 7,
wherein the carbon-based first negative electrode active material is a graphite-based negative electrode active material.

13. The negative electrode for a lithium secondary battery according to any one of claims 1 to 7,
wherein the second negative electrode active material is one or more mixtures selected from the group consisting of Si, SiOx(0<x<2), Si-C composite, and Si metal alloy.

14. The negative electrode for a lithium secondary battery according to any one of claims 1 to 7,
wherein an average value of a total loading amount of the first negative electrode active material layer and the second negative electrode active material layer is 4 mAh/cm² or more.

15. A lithium secondary battery comprising the negative electrode according to any one of claims 1 and 7.

16. A method for manufacturing a negative electrode for a lithium secondary battery comprising:
mixing and stirring a carbon-based first negative electrode active material, a conductive material, and a binder in a solvent to prepare a first negative electrode slurry;
mixing and stirring a second negative electrode active material different from the carbon-based first negative electrode active material, a conductive material, and a binder in a solvent to prepare a second negative electrode slurry;
preparing a conductive layer slurry;
a first coating process of coating the first negative electrode slurry on a current collector;
a second coating process of coating the second negative electrode slurry and the conductive layer slurry on the first negative electrode slurry; and
drying the first negative electrode slurry, the second negative electrode slurry, and the conductive layer slurry, wherein
the second coating process coats so that the second negative electrode slurry and the conductive layer slurry are alternately arranged in a horizontal direction.

17. The method for manufacturing a negative electrode for a lithium secondary battery according to claim 16,
wherein a solid content of the second negative electrode slurry is greater than a solid content of the conductive layer slurry.

18. The method for manufacturing a negative electrode for a lithium secondary battery according to claim 16,
wherein the second coating process comprises coating the second negative electrode slurry and the conductive layer slurry using a nozzle printer.

19. The method for manufacturing a negative electrode for a lithium secondary battery according to claim 16,
wherein the conductive layer slurry further includes a negative electrode active material.

20. The method for manufacturing a negative electrode for a lithium secondary battery according to claim 19,
wherein the conductive layer slurry and the second negative electrode slurry comprises a same composition.

21. The method for manufacturing a negative electrode for a lithium secondary battery according to claim 19,
wherein a wt% of the conductive material included in a solid content of the conductive layer slurry is greater than a wt% of the conductive material included in a solid content of the second negative electrode slurry.

22. The method for manufacturing a negative electrode for a lithium secondary battery according to claim 16,
wherein the conductive layer slurry does not comprise a negative electrode active material, and comprises:
80 to 100 parts by weight of the conductive material and
20 parts by weight or less of the binder in a solid content.

23. A method for manufacturing a negative electrode for a lithium secondary battery comprising:
mixing and stirring a carbon-based first negative electrode active material, a conductive material, and a binder in a solvent to prepare a first negative electrode slurry;
mixing and stirring a second negative electrode active material different from the carbon-based first negative electrode active material, a conductive material, and a binder in a solvent to prepare a second negative electrode slurry;
coating the first and second negative electrode slurries on a current collector so that the second negative electrode slurry is stacked on the first negative electrode slurry;
drying the first and second negative electrode slurries; and
etching a second negative electrode active material layer formed by drying the second negative electrode slurry at a predetermined spacing and width to form a pattern in which a plurality of concave portions indented toward the current collector and a plurality of non-concave portions are alternately arranged in a horizontal direction.

24. The method for manufacturing a negative electrode for a lithium secondary battery according to claim 23,
wherein in the patterning process, etching is performed using a laser.
